Europäisches Patentamt

European Patent Office

Office européen des brevets

(11) Veröffentlichungsnummer: **0 258 839 B1**

(19)

(12) EUROPÄISCHE PATENTSCHRIFT

(45) Veröffentlichungstag der Patentschrift: **18.03.92**

(21) Anmeldenummer: **87112556.3**

(22) Anmeldetag: **28.08.87**

(51) Int. Cl.⁵: **G02B 6/44**

(54) Optisches Kabel und Verfahren zu dessen Herstellung.

(30) Priorität: **02.09.86 DE 3629827**

(43) Veröffentlichungstag der Anmeldung:
**09.03.88 Patentblatt 88/10**

(45) Bekanntmachung des Hinweises auf die
Patenterteilung:
**18.03.92 Patentblatt 92/12**

(84) Benannte Vertragsstaaten:
**AT BE CH DE FR GB IT LI NL SE**

(56) Entgegenhaltungen:
**EP-A- 0 015 425**
**DE-A- 2 302 662**
**DE-A- 3 200 760**
**DE-A- 3 319 370**
**DE-B- 2 728 642**

(73) Patentinhaber: **SIEMENS AKTIENGESELL-
SCHAFT
Wittelsbacherplatz 2
W-8000 München 2(DE)**

(72) Erfinder: **Mayr, Ernst
Wernbergstrasse 5
W-8130 Starnberg(DE)**

EP 0 258 839 B1

**Beschreibung**

Die Erfindung betrifft ein optisches Kabel mit mindestens einem mehrere Lichtwellenleiter enthaltenden Lichtwellenleiterbündel, welches innerhalb eines Außenmantels angeordnet ist, wobei in der Kabelseele eine die Längsdichtigkeit ergebende Füllmasse vorgesehen ist.

Ein Kabel dieser Art ist aus der DE-AS 27 28 642 bekannt, wobei der vom Kabelmantel umschlossene Innenraum mit einer im Kabel schwach vernetzenden Substanz gefüllt ist. Das so erhaltene längswasserdichte Kabel kann als Füllmasse ein schwach vernetzendes Silikonharz, ein Polyesterharz, einen thermoplastischen Polyurethankautschuk oder angequollenes Polysterol in Öl enthalten. Da die gesamte Kabelseele mit einer einzigen Füllmasse versehen ist, bestimmt diese auch allein das gesamte Verhalten.

In vielen Fällen ist es wünschenswert, eine Anzahl von einzelnen, mit einer Beschichtung (coating) versehenen Lichtwellenleiteradern zu einem Bündel zusammenzufassen, wobei ein oder mehrere derartige Bündel innerhalb des gemeinsamen Kabelmantels angeordnet werden. Ein derartiges Bündel kann als selbständige Einheit beim Herstellungsprozeß eingesetzt werden und bietet auch günstigere Möglichkeiten im Rahmen von Spleißvorgängen, weil dort jeweils bündelweise für sich gespleißt werden kann. So lassen sich beispielsweise mehrere Bündel vorsehen, welche in sich bezüglich ihrer einzelnen Lichtwellenleiteradern zwar die gleichen Farbkombinationen aufweisen, jedoch nur bündelweise voneinander zusätzlich unterscheidbar zu machen sind. Man kann also beispielsweise mit einer geringeren Zahl von Farben bei der Adereinfärbung auskommen. Voraussetzung für eine gute Unterscheidbarkeit und einfache Handhabung innerhalb des Faserbündels ist aber, daß der Zusammenhalt innerhalb des Aderbündels noch ausreichend gewährleistet ist. Außerdem sollte aus mechanischen Gründen das Aderbündel in sich noch eine ausreichende Elastizität aufweisen und doch im Rahmen von Spleißvorgängen die Möglichkeit bieten, jede einzelne Lichtwellenleiterader aus dem Bündelverband zu lösen.

Der vorliegenden Erfindung liegt die Aufgabe zugrunde, einen Aufbau für ein optisches Kabel zu schaffen, welches sich leicht und einfach herstellen läßt, welches im fertigen Zustand einen guten Schutz der Lichtwellenleiler gegen mechanische Beanspruchungen ergibt, bei welchem die Zugänglichkeit der Lichtwellenleiter vereinfacht ist und bei dem der Zusammenhalt innerhalb des Bündels in ausreichender Weise gewährleistet bleibt. Gemäß der Erfindung wird diese Aufgabe bei einem optischen Kabel der eingangs genannten Art dadurch gelöst, daß das Lichtwellenleiterbündel mit einer haftenden ersten Füllmasse getränkt ist, deren Viskosität so gewählt ist, daß sie zum einen den Zusammenhalt des Lichtwellenleiterbündels gewährleistet und daß sie zum anderen das Herauslösen einzelner Lichtwellenleiter aus dem Lichtwellenleiterbündel noch zuläßt, und daß der übrige Raum innerhalb des Außenmantels mit einer zweiten Füllmasse gefüllt ist, deren Viskosität wesentlich geringer ist als die der ersten Füllmasse.

Die erste, eigentlich nur zur Tränkung der Lichtwellenleiter benutzte Füllmasse gewährleistet also den Zusammenhalt des Lichtwellenleiterbündels (welches als solches keinen besonders großen Beanspruchungen ausgesetzt ist) und bietet doch die Möglichkeit in einfacher und einer die Lichtwellenleiter nicht schädigenden Weise die einzelnen Lichtwellenleiter aus dem Verband des Lichtwellenleiterbündels wieder zu lösen, was für Spleißvorgänge unerläßlich ist. Infolge der Tränkung mit dieser ersten Füllmasse ergeben sich auch keine unerwünschten luftgefüllten Zwickel. Dadurch, daß der übrige Raum innerhalb des Außenmantels mit der zweiten, wesentlich weicheren Füllmasse erfüllt ist, ergibt sich die Möglichkeit, daß das Lichtwellenleiterbündel als Ganzes innerhalb dieser zweiten Füllmasse noch Ausweichbewegungen durchführen kann, was z.B. beim Biegen, Auf- oder Abtrommeln des Kabels von Bedeutung ist. Durch die Abstimmung der Eigenschaften der beiden die Längsdichtigkeit ergebenden Füllmassen aufeinander ergeben sich vielfältige Möglichkeiten hinsichtlich der Materialauswahl und hinsichtlich der erzielbaren Eigenschaften des so aufgebauten Kabels. Das Lichtwellenleiterbündel bietet als solches günstige Eigenschaften und Möglichkeiten für die Weiterverarbeitung, weil es durch die haftende Füllmasse in ausreichender Weise in sich zusammengehalten wird. Andererseits sind doch noch innerhalb des Bündels ebenfalls in geringerem Umfang Ausgleichsvorgänge der einzelnen Lichtwellenleiter gegeneinander möglich, da ja sogar deren Lösbarkeit aus dem Gesamtverband noch gewährleistet sein soll.

Die Erfindung betrifft weiterhin ein Verfahren zur Herstellung eines Kabels der vorstehend genannten Art, welches dadurch gekennzeichnet ist, daß die Lichtwellenleiter vor oder bei ihrer Zusammenfassung zum Lichtwellenleiterbündel mit einer Tränkung mit der ersten Füllmasse versehen werden, und daß die zweite Füllmasse vor oder bei der Extrusion des Außenmantels eingebracht wird.

Sonstige Weiterbildungen der Erfindung sind in Unteransprüchen wiedergegeben.

Die Erfindung und ihre Weiterbildungen werden nachfolgend anhand von Zeichnungen erläutert. Es zeigen:

Figur 1      in schematischer Darstellung eine Einrichtung zur Herstellung eines optischen Kabels nach der Erfindung,

Figur 2　in vergrößertem Maßstab einen Querschnitt durch ein optisches Kabel gemäß der Erfindung und

Figur 3　in vergrößertem Maßstab einen Querschnitt durch ein einzelnes Lichtwellenleiterbündel.

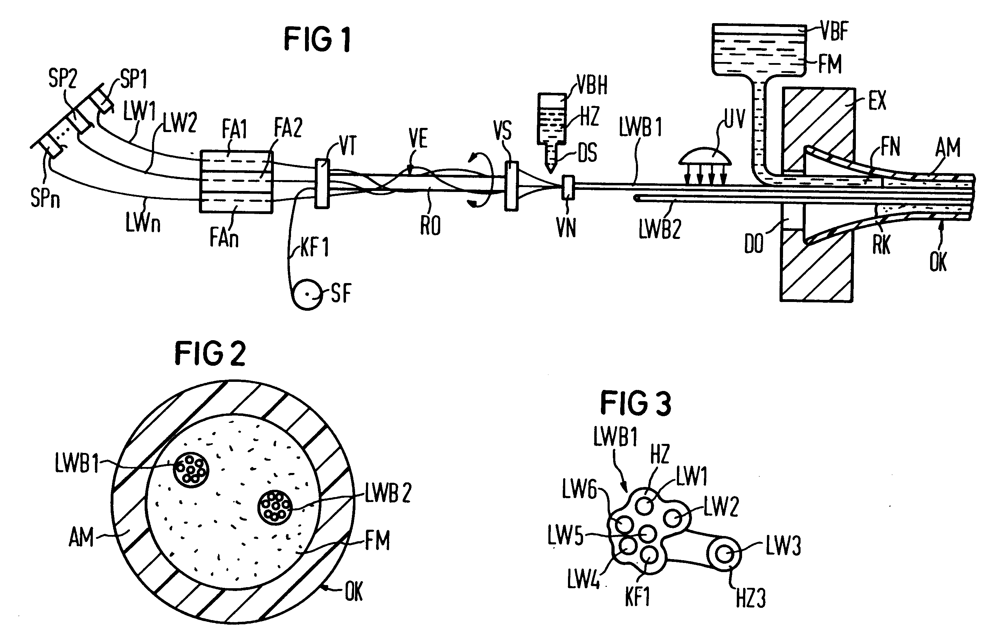

In Figur 1 ist eine Reihe von Spulen SP1,SP2 bis SPn vorgesehen, von denen beschichtete (d.h. mit "coating" versehene) Lichtwellenleiter LW1,LW2 bis LWn vorzugsweise überkopf abgezogen werden. Diese Lichtwellenleiter durchlaufen getrennte Einfärbeinrichtungen FA1 bis FAn, so daß am Ausgang entsprechend farbkodierte Lichtwellenleiter zur Verfügung stehen. Die Lichtwellenleiter werden zu einem Bündel zusammengefaßt, und zwar vorzugsweise durch Verseilung in einer Verseileinrichtung VE. In vorliegendem Beispiel ist ein Rohrspeicher RO dargestellt, welcher mit wechselnder Drehrichtung betrieben wird und somit eine SZ-Verseilung des durch die Lichtwellenleiter LW1 bis LWn gebildeten Lichtwellenleiterbündels bewirkt. Der Rohrspeicher RO enthält an seinem Eingang eine Verteilscheibe VT (feststehend) und am Ausgang eine synchron mit ihm rotierende Verseilscheibe VS.

Wenn mehrere Lichtwellenleiterbündel innerhalb eines Kabels vorgesehen sind (z.B. LWB1 und LWB2 in Figur 2), dann ist es zweckmäßig, die einzelnen Lichtwellenleiterbündel untereinander kenntlich zu machen. Dies kann beispielsweise dadurch erfolgen, daß zusammen mit den Lichtwellenleitern LW1 bis LWn ein Kennfaden KF1 mit verseilt wird, der von einer Vorratspule SF abgezogen wird. Es ist aber auch möglich, diesen Kennfaden in der Art einer Haltewendel nach der Verseilung lose auf das Lichtwellenleiterbündel aufzubringen.

Am Ausgang der Verseileinrichtung VE ist ein Vorratsbehälter VBH vorgesehen, welcher in seinem Inneren ein flüssiges Harz HZ enthält, das über eine Düse DS in Richtung auf die Lichtwellenleiter austritt. Die Düse DS liegt vor dem Verseilnippel VN, also in einem Bereich, in welchem die einzelnen Lichtwellenleiter noch nicht vollständig zum Bündel zusammengefaßt sind, so daß jeder einzelne Lichtwellenleiter von dem praktisch flüssigen Harz HZ benetzt und umgeben wird. Der nachfolgende Verseilnippel VN dient gleichzeitig als Abstreifeinrichtung, wodurch sichergestellt ist, daß nur wenig mehr als die Außenkontur des Lichtwellenleiterbündels von dem Harz HZ angefüllt wird. Es ist auch möglich, die Zuführung des Harzes mit dem Verseilnippel VN zu vereinigen, also beispielsweise in dem Verseilnippel VN eine entsprechende (an die Düse DS anzuschließende) Bohrung anzubringen, welche an der Einlaufseite austritt und dadurch die einlaufenden Lichtwellenleiter LW1 bis LWn mit dem Harz allseitig benetzt.

Es kann zweckmäßig sein, einen entsprechenden Vorrat an Füllmasse vorzusehen, also eine wulstartige Anhäufung des Harzes HZ im Bereich des Verseilnippels VN zu bewirken. Das so allseitig mit dem sehr flüssigen Harz HZ benetzte Lichtwellenleiterbündel LWB1 wird nun einer Trocknungseinrichtung, vorzugsweise in Form einer Lampe UV zugeführt, wo die notwendige Vernetzung erfolgt.

Das Harz HZ soll in seiner Konsistenz so gewählt werden, daß es eine gute Benetzung der Lichtwellenleiter LW1 bis LWn bewirkt, innerhalb des Bündels LWB1 eine geschlossene Struktur (möglichst ohne Lufteinschlüsse) ergibt und dabei auch nach der Vernetzung bzw. Aushärtung noch so weich bleibt, daß die einzelnen Lichtwellenleiter LW1 bis LWn aus dem Verband wieder gelöst werden können, wie näher anhand von Figur 3 beschrieben wird.

Das Lichtwellenleiterbündel LWB1 und gegebenenfalls weitere Lichtwellenleiterbündel (schematisch angedeutet das Bündel LWB2) laufen in die Durchtrittsöffnung DO eines Extruders EX ein, in die auch eine Füllnadel FN hineinragt, die mit einem Vorratsbehälter VBF verbunden ist, in dem eine Füllmasse FM enthalten ist. Diese Füllmasse FM weist eine im Vergleich zu dem vernetzten oder ausgehärteten Harz HZ wesentlich geringere Viskosität auf, ist also weicher bis nahezu flüssig, und füllt den gesamten restlichen Innenraum des fertigen optischen Kabels OK aus. Die Füllnadel FN reicht bis in den Reckkegel RK des vom Extruder EX gelieferten Extrudats hinein, welcher schließlich nach der Reduzierung seines Durchmessers den Außenmantel AM des optischen Kabels OK ergibt.

Für das Harz HZ wird bevorzugt Silikonharz verwendet. Dabei ist es zweckmäßig, wenn dieses so gewählt ist, daß es UV-aushärtbar ist. Anstelle von Silikonharz lassen sich aber auch andere auch im vernetzten Zustand noch weichbleibende Harze verwenden wie z.B. Polyurethan-Acrylate. Das Harz HZ sollte durchsichtig sein, um die Kennfarben der Lichtwellenleiter sichtbar zu halten.

Als Füllmasse FM kommen bevorzugt die bekannten thixotropierte Füllmassen infrage oder Polyglykolfüllmassen, wie sie z.B. in den deutschen Patentanmeldungen P 35 24 166 und 35 24 181 beschrieben sind. Auch (noch schwächer als das Harz HZ) vernetzende Substanzen können eingesetzt werden.

Das fertige optische Kabel OK zeigt im Querschnitt die in Figur 2 dargestellte Struktur. Die einzelnen Lichtwellenleiterbündel LWB1 und LWB2 sind durch das klebrige, weichelastische Harz HZ zu einer ausreichend festen Bündelstruktur zusammengehalten, wobei das Harz HZ, wie bereits erwähnt, die Zwickelräume innerhalb des Bündels vollständig ausfüllt und so als erste Füllmasse anzusehen ist. Die zweite Füllmasse FM schließt den übrigen, weitaus größeren Raum innerhalb der Kabelseele dichtend ab, wobei der Volumenanteil der ersten Füllmasse (Harz HZ) wesentlich geringer ist als der der zweiten Füllmasse FM und zwar vorzugsweise zwischen

$$\frac{1}{10} \text{ und } \frac{1}{100}$$

der letztgenannten liegt. Da die Füllmasse FM in ihrer Viskosität wesentlich niedriger liegt als die des Harzes HZ, können sich die Lichtwellenleiterbündel LWB1 und LWB2 z.B. beim Biegen des optischen Kabels OK innerhalb der sehr weichen zweiten Füllmasse FM etwas bewegen und somit mechanischen Beanspruchungen ausweichen.

In Figur 3 ist das vergrößerte Lichtwellenleiterbündel LWB1 im Querschnitt gezeichnet. Die einzelnen Lichtwellenleiter LW1 bis LW6 sind allseitig von Harz HZ umschlossen, das zugleich auch den Kennfaden KF1 mit umschließt. Wenn der Kennfaden KF1 nicht die Benetzungseinrichtung (dargestellt durch den Behälter VBH und die Düse DS in Figur 1) mit durchläuft, dann kann dieser Kennfaden auch außerhalb der Harzumhüllung liegen, beispielsweise in Form einer lose aufliegenden Haltewendel. In diesem Fall wäre der zugehörige Haltewendelspinner bei der Anordnung nach Figur 1 nach dem Verseilnippel VN anzuordnen. Das Harz HZ, welches haftend die Lichtwellenleiter LW1 bis LW6 umschließt aber doch noch so weich ist, daß die einzelnen Lichtwellenleiter von Hand und ohne Werkzeug (z.B. durch Abbiegen am Ende) wieder von einander gelöst werden können, sichert den Zusammenhalt der Lichtwellenleiter innerhalb des Lichtwellenleiterbündels LWB1. Für den Spleißvorgang kann dagegen der Lichtwellenleiterverband wieder aufgelöst werden, wie durch den Lichtwellenleiter LW3 gezeigt wird, der aus dem Verband der übrigen Lichtwellenleiter herausgelöst ist, wobei ein Harzfilm HZ3 sich zusammen mit dem Lichtwellenleiter ablöst. Die durch das Harz HZ gebildete erste Füllmasse erfüllt nur einen relativ kleinen Teil des Gesamtquerschnitts des Lichtwellenleiterbündels LWB1, und zwar vorzugsweise höchstens zwischen 30 % und 50 %. Das Harz HZ sollte also eine relativ dünne Beschichtung der einzelnen Lichtwellenleiter bilden, innerhalb des Lichtwellenleiterbündels nicht allzusehr auftragen und auch nach außen den Gesamtdurchmesser des Lichtwellenleiterbündels nicht erheblich vergrößern (höchstens um ca. 10 %). Der Viskositätsbereich (ausgehärtet) bei Raumtemperatur für das Harz HZ wird zweckmäßig etwa von 1000 bis 30 000 mPa s gewählt, während der Viskositätsbereich für die Füllmasse etwa zwischen 100 bis 5000 mPa s liegt.

Zweckmäßig ist die Viskosität der zweiten Füllmasse FM etwa

$$\frac{1}{10} \text{ bis } \frac{1}{100}$$

der Viskosität des Harzes HZ gewählt. Für die zweite Füllmasse FM kann eine wesentlich preisgünstigere Substanz verwendet werden, als für die erste Füllmasse (Harz HZ).

**Patentansprüche**

1. Optisches Kabel (OK) mit mindestens einem mehrere Lichtwellenleiter (LW1 bis LWn) enthaltenden Lichtwellenleiterbündel (LWB1), welches innerhalb eines Außenmantels (AM) angeordnet ist, wobei in der Kabelseele eine die Längsdichtigkeit ergebende Füllmasse vorgesehen ist,
   **dadurch gekennzeichnet**,
   daß das Lichtwellenleiterbündel (LWB1) mit einer haftenden ersten Füllmasse (HZ) getränkt ist, deren Viskosität so gewählt ist, daß sie zum einen den Zusammenhalt des Lichtwellenleiterbündels (LWB1) gewährleistet und daß sie zum anderen das Herauslösen einzelner Lichtwellenleiter (z.B. LW3) aus dem Lichtwellenleiterbündel (LWB1) noch zuläßt, und daß der übrige Raum innerhalb des Außenmantels (AM) mit einer zweiten Füllmasse (FM) gefüllt ist, deren Viskosität wesentlich geringer ist als die der ersten Füllmasse (HZ).

2. Optisches Kabel nach Anspruch 1,
   **dadurch gekennzeichnet**,
   daß die erste Füllmasse (HZ) aus einem schwach vernetzenden Harz, insbesondere Silikonharz, besteht.

3. Optisches Kabel nach Anspruch 1,
   **dadurch gekennzeichnet**,
   daß die erste Füllmasse (HZ) so dünn aufgetragen ist, daß sie nur eine Umhüllungsschicht der Lichtwellenleiter (LW1, LW2) ergibt.

4. Optisches Kabel nach Anspruch 3,
   **dadurch gekennzeichnet**,
   daß die erste Füllmasse (HZ) höchstens zwischen 30 % und 50 % des Gesamtquerschnittes des Lichtwellenleiterbündels (LWB1) ausmacht.

5. Optisches Kabel nach einem der vorhergehenden Ansprüche,
   **dadurch gekennzeichnet**,
   daß der Volumenanteil der ersten Füllmasse (HZ) wesentlich geringer als der der zweiten Füllmasse (FM) gewählt ist und vorzugsweise zwischen

$$\frac{1}{10} \text{ und } \frac{1}{100}$$

liegt.

6. Optisches Kabel nach einem der vorhergehenden Ansprüche,
**dadurch gekennzeichnet,**
daß die zweite Füllmasse (FM) thixotropiert ist und insbesondere aus einem thixotropierten Öl oder einem thixotropierten Polyglykol besteht.

7. Optisches Kabel nach einem der Ansprüche 1 bis 5,
**dadurch gekennzeichnet,**
daß die zweite Füllmasse (FM) aus einem besonders schwach vernetzten Material besteht.

8. Optisches Kabel nach einem der vorhergehenden Ansprüche,
**dadurch gekennzeichnet,**
daß die Viskosität der zweiten Füllmasse (FM) zwischen

$$\frac{1}{10} \text{ und } \frac{1}{100}$$

der Viskosität der ersten Füllmasse (HZ) gewählt ist.

9. Verfahren zur Herstellung eines Kabels nach einem der vorhergehenden Ansprüche,
**dadurch gekennzeichnet,**
daß die Lichtwellenleiter (LW1 bis LWn) vor oder bei ihrer Zusammenfassung zum Lichtwellenleiterbündel (LWB1) durch eine Tränkung mit der ersten Füllmasse (HZ) versehen werden, und daß die zweite Füllmasse (FM) vor oder bei der Extrusion des Außenmantels (MA) eingebracht wird.

10. Verfahren nach Anspruch 9,
**dadurch gekennzeichnet,**
daß jedes Lichtwellenleiterbündel (LWB1) mit einem unterschiedlichen Kennfaden (KF1) versehen wird.

11. Verfahren nach den Ansprüchen 9 oder 10,
**dadurch gekennzeichnet,**
daß die erste Füllmasse (HZ) nach dem Aufbringen getrocknet, vorzugsweise vernetzt wird.

## Claims

1. Optical cable (OK) having at least one optical waveguide bundle (LWB1) which contains a plurality of optical waveguides (LW1 to LWn) and is arranged inside an outer sheath (AM), there being arranged in the cable core a filling compound producing longitudinal tightness, characterised in that the optical waveguide bundle (LWB1) is impregnated with an adhering first filling compound (HZ) whose viscosity is selected, on the one hand, to guarantee the cohesion of the optical waveguide bundle (LWB1) and, on the other hand, still to allow separation of individual optical waveguides (for example LW3) from the optical waveguide bundle (LWB1), and in that the remaining space inside the outer sheath (AM) is filled with a second filling compound (FM) whose viscosity is significantly lower than that of the first filling compound (HZ).

2. Optical cable according to Claim 1, characterised in that the first filling compound (HZ) is composed of a lightly cross-linking resin, preferably silicone resin.

3. Optical cable according to Claim 1, characterised in that the first filling compound (HZ) is so thinly applied that it produces only an enveloping coating of the optical waveguides (LW1, LW2).

4. Optical cable according to Claim 3, characterised in that the first filling compound (HZ) makes up at most between 30% and 50% of the overall cross-section of the optical waveguide bundle (LWB1).

5. Optical cable according to one of the preceding claims, characterised in that the volume share of the first filling compound (HZ) is selected to be significantly lower than that of the second filling compound (FM), and is preferably between

$$\frac{1}{10} \text{ and } \frac{1}{100}.$$

6. Optical cable according to one of the preceding claims, characterised in that the second filling compound (FM) is thixotropic and is preferably composed of a thixotropic oil or a thixotropic polyglycol.

7. Optical cable according to one of Claims 1 to 5, characterised in that the second filling compound (FM) is composed of a particularly lightly cross-linked material.

8. Optical cable according to one of the preceding claims, characterised in that the viscosity of the second filling compound (FM) is selected to be between

$$\tfrac{1}{10} \text{ and } \tfrac{1}{100}$$

of the viscosity of the first filling compound (HZ).

9. Method for producing a cable according to one of the preceding claims, characterised in that before or during their combination to form an optical waveguide bundle (LWB1) the optical waveguides (LW1 to LWn) are provided with the first filling compound (HZ) by impregnation, and in that the second filling compound (FM) is introduced before or during the extrusion of the outer sheath (AM).

10. Method according to Claim 9, characterised in that each optical waveguide bundle (LWB1) is provided with a different identifying thread (KF1).

11. Method according to Claim 9 or 10, characterised in that after application the first filling compound (HZ) is dried, preferably crosslinked.

**Revendications**

1. Câble optique (OK) possédant au moins un faisceau (LWB1) de guides d'ondes optiques, qui comporte plusieurs guides d'ondes optiques (LW1 à LWn) et est disposé à l'intérieur d'une gaine extérieure (AM), une masse de remplissage établissant l'étanchéité longitudinale étant prévue dans l'âme du câble, caractérisé par le fait
que le faisceau (LWB1) de guides d'ondes optiques est imprégné par une première masse de remplissage adhérente (HZ), dont la viscosité est choisie de telle sorte qu'elle garantit, d'une part, la cohésion du faisceau (LWB1) de guides d'ondes optiques tout en permettant par ailleurs le détachement de guides d'ondes optiques individuels (par exemple LW3) du faisceau (LWB1) de guides d'ondes optiques, et
que l'espace restant à l'intérieur de la gaine extérieure (AM) est rempli par une seconde masse de remplissage (FM), dont la viscosité est nettement inférieure à celle de la première masse de remplissage (HZ).

2. Câble optique suivant la revendication 1, caractérisé par le fait que la première masse de remplissage (HZ) est contituée par une résine faiblement réticulée, notamment une résine silicone.

3. Câble optique suivant la revendication 1, caractérisé par le fait que la première masse de remplissage (HZ) est déposée d'une manière suffisamment mince pour ne former qu'une couche enveloppe des guides d'ondes optiques (LW1,LW2).

4. Câble optique suivant la revendication 3, caractérisé par le fait que la première masse de remplissage (HZ) occupe au maximum entre 30 % et 50 % de la section transversale totale du faisceau (LWB1) de guides d'ondes optiques.

5. Câble optique suivant l'une des revendications précédentes, caractérisé par le fait que le pourcentage en volume de la masse de remplissage (HZ) est choisi nettement inférieur à celui de la seconde masse de remplissage (FM) et est de préférence compris entre 1/10 et 1/100.

6. Câble optique suivant l'une des revendications précédentes, caractérisé par le fait que la seconde masse de remplissage (FM) est thixotrope et est constituée notamment par une huile rendue thixotrope ou un polyglycol rendu thixotrope.

7. Câble optique suivant l'une des revendications 1 à 5, caractérisé par le fait que la seconde masse de remplissage (FM) est formée d'un matériau particulièrement faiblement réticulé.

8. Câble optique suivant l'une des revendications précédentes, caractérisé par le fait que la viscosité de la seconde masse de remplissage (FM) est choisie entre 1/10 et 1/100 de la viscosité de la première masse de remplissage (HZ).

9. Procédé pour fabriquer un câble suivant l'une des revendications précédentes, caractérisé par le fait qu'on applique par imprégnation la première masse de remplissage (HZ) aux guides d'ondes optiques (LW1 à LWn) avant ou pendant leur réunion pour former le faisceau (LWB1) de guides d'ondes optiques, et qu'on introduit la seconde masse de remplissage (FM) avant ou pendant l'extrusion de la gaine extérieure

10. Procédé suivant la revendication 9, caractérisé par le fait que chaque faisceau (LWB1) de guides d'ondes optiques est pourvu d'un fil d'identification différent (KF1).

11. Procédé suivant les revendications 9 ou 10, caractérisé par le fait qu'on fait sécher et que de préférence on fait réticuler la première masse de remplissage (HZ) après son dépôt.

## FIG 1

## FIG 2

## FIG 3

EP 0 258 839 B1